# EUROPÄISCHE PATENTSCHRIFT

(11) **EP 1 519 781 B1**
(45) Veröffentlichungstag und Bekanntmachung des Hinweises auf die Patenterteilung: **02.01.2013**
(21) Anmeldenummer: 03725062.8
(22) Anmeldetag: 19.04.2003
(51) Int. Cl.: B01D 53/14, C10K 1/16, C01B 3/02

(54) **ANLAGENEINHEIT ZUR DESORPTION VON KOHLENDIOXID AUS METHANOL**
SYSTEM UNIT FOR DESORBING CARBON DIOXIDE FROM METHANOL
DISPOSITIF DE DESORPTION DE DIOXYDE DE CARBONE A PARTIR DE METHANOL

(30) Priorität: 03.07.2002 DE 10229750
(43) Veröffentlichungstag der Anmeldung: 06.04.2005
(73) Patentinhaber: Lurgi AG, 60295 Frankfurt am Main (DE)
(72) Erfinder: DAVEY, William, 60439 Frankfurt am Main (DE); MEYER, Manfred, 61381 Friedrichsdorf (DE)
(74) Vertreter: Meyer-Dulheuer, Karl-Hermann
(86) Internationale Anmeldenummer: PCT/EP2003/004112
(87) Internationale Veröffentlichungsnummer: WO 2004/004870

(56) Entgegenhaltungen:
- EP-A- 0 270 040
- DE-A- 3 902 276
- US-A- 4 252 548
- US-A- 4 822 393

## Beschreibung

Gegenstand der Erfindung ist eine Anlageneinheit, die es ermöglicht, das bei der Totalreinigung von Druckgasen eingesetzte Methanol in reiner Form zurückzugewinnen und gleichzeitig die dabei entstehende Kälteenergie in einer äußerst wirksamen Weise zu nutzen.

Es ist bekannt, dass kaltes Methanol in hohem Maße die Fähigkeit hat, Gasverunreinigungen aufzunehmen. Von dieser Fähigkeit wird bei dem Rectisol^{®}-Verfahren Gebrauch gemacht, bei dem die Totalreinigung von Druckgasen in einem einzigen Verfahrensgang möglich ist. Die Absorptionsfähigkeit des Methanols nimmt mit sinkenden Temperaturen erheblich zu. Bei - 60°C löst sich z.B. 75 mal so viel Kohlendioxid in Methanol wie bei + 25°C im gleichen Volumen Wasser, d.h., der Methanolumlauf beträgt nur 1/75 verglichen mit dem Wasserumlauf einer Druckwasserwäsche. Bei tiefer Temperatur liegt der Dampfdruck des Methanols so niedrig, dass der Lösungsmittelverbrauch gering ist.

Das Rectisol^{®}-Verfahren ist besonders wirtschaftlich, wenn große Mengen von Gasverunreinigungen entfernt werden müssen oder eine besonders große Gasreinheit gefordert wird, ferner überall dort, wo das Verfahren in den Kälteteil einer Tieftemperatur-Gaszerlegung eingebaut werden kann. Im letzteren Fall bietet das Verfahren selbst dann wesentliche Vorteile, wenn nur kleine Gehalte an Gasverunreinigungen auszuwaschen sind.

Die Gaswäsche wird dabei so durchgeführt, dass das unter Mitteldruck von 5 bis 40 atü oder auch unter Hochdruck von 50 bis 200 atü stehende Rohgas bei Temperaturen zwischen + 10°C und - 80°C mit Methanol behandelt wird. Dabei werden alle Gasverunreinigungen wie Rohbenzin, Rohbenzol, Ammoniak, Blausäure, Harzbildner, organische Schwefel- und Phosphorverbindungen, Kohlensäure, Schwefelwasserstoff, Eisen- und andere Metallkarbonyle sowie Wasser absorbiert. Das beladene Methanol wird dann durch Entspannen, Evakuieren oder Erhitzen regeneriert und anschließend wieder verwendet. Die Verunreinigungen können aus den Abgasen bzw. den Kondensaten wiedergewonnen werden. Dieses Verfahren ist Gegenstand der deutschen Patentschrift 1 544 080.

Aus den US-Patentschriften 4 252 548 und 4 822 393 sind Verfahren zum Entfernen von Kohlendioxyd aus Kohlenwasserstoffe enthaltenden Gasgemischen bekannt, bei denen aufwendige Apparaturen eingesetzt werden, die insbesondere auch Pumpen enthalten. Anlagen und Verfahren, die von dem Thermosiphoneffekt Gebrauch machen, sind dort nicht beschrieben.

Aus der EP 0 270 040 A2 ist ein Verfahre zur Wiedergewinnung von Kohlendioxyd aus einem Lösungsmittel bekannt, das bei der Reinigung eines Gasstromes eingesetzt worden ist. Die Regeneration des mit Kohlendioxyd beladenen Lösungsmittels erfolgt dabei unter Verwendung von Strippgasen bei einem verminderten Druck im Bereich von unter 0,35 bar. Das Verfahren eignet sich bevorzugt zur Behandlung von Ammoniumverbindungen. Wichtigstes Hilfsmittel ist dabei eine Selexol-™-Lösung. Aufgabenstellung und Durchführung des Verfahrens unterscheiden sich damit vom Gegenstand der vorliegenden Erfindung.

Ein in der Technik besonders wichtiges Gasreinigungsverfahren besteht in der Reinigung von durch Vergasungsvorgänge von z.B. aus Erdgas gewonnenen Synthesegasen, die Ausgangspunkt vielfältiger großtechnischer Synthesen sind. Das rohe Synthesegas enthält erhebliche Mengen von Kohlendioxid, dessen Entfernung für die weitere Verwendung von Synthesegasen von entscheidender Bedeutung ist. Die Entwicklung von effektiven, zuverlässigen und kostengünstigen Verfahren zur Entfernung von Kohlendioxid aus Synthesegasen ist deshalb für die wirtschaftliche Gewinnung vielfältig einsetzbarer Gasgemische von überragender Bedeutung.

Es wurde nun gefunden, dass die bisher bekannten Verfahren zur Reinigung von Gasen mit Methanol noch erheblich verbessert werden können, wenn die erfindungsgemäße Anlageneinheit und das darin durchführbare Verfahren zur Desorption von Kohlendioxid aus Methanol zur Anwendung kommen.

Gegenstand der Erfindung ist deshalb eine Anlageneinheit zur Desorption von Kohlendioxid und anderen Verunreinigungen aus unter erhöhtem Druck stehendem Methanol, die einem zur Reinigung von Synthesegas mit Methanol vorgesehenen Absorber (5) nachgeschaltet ist, umfassend einen oder mehrere, hintereinander angeordnete Entspannungsbehälter A, B, C, einen Wärmeaustauscher E und mindestens einen Flüssig/Gas-Abscheider D, bei der
a) eine Leitung (1) vorgesehen ist, durch die das den Entspannungsbehälter C verlassende, stark abgekühlte Methanol von unten in einen Wärmetaustauscher E eingeleitet wird; und
b) eine Leitung (2) vorgesehen ist, durch die das erwärmte Methanol oben aus dem Wärmeaustauscher E herausgeführt wird und ihn mit einem Flüssig/Gas-Abscheider verbindet, in dem das restliche, noch im Methanol enthaltene Kohlendioxid weitestgehend desorbiert wird;
c) wobei der Flüssigkeitsspiegel im Entspannungsbehälter C 1 bis 20 m über dem Flüssigkeitsspiegel im Flüssig/Gas-Abscheider D liegt;
d) dieser wiederum etwa 0,5 m über der oben im Wärmeaustauscher E vorgesehenen Austrittsöffnung für das erwärmte Methanol liegt; und
e) der Abstand zwischen der von unten in den Wärmeaustauscher E eintretenden Leitung (1) für das aus dem Entspannungsbehälter C zugeleitete Methanol und dem Boden des Wärmeaustauschers E etwa 0,5 m beträgt und
f) der Anlageneinheit ein Regenerator (6) nachgeschaltet ist, in dem durch weitere Temperaturerhöhung und Einströmen eines erwärmten inerten Gases das restliche Kohlendioxid aus dem Methanol desorbiert wird.

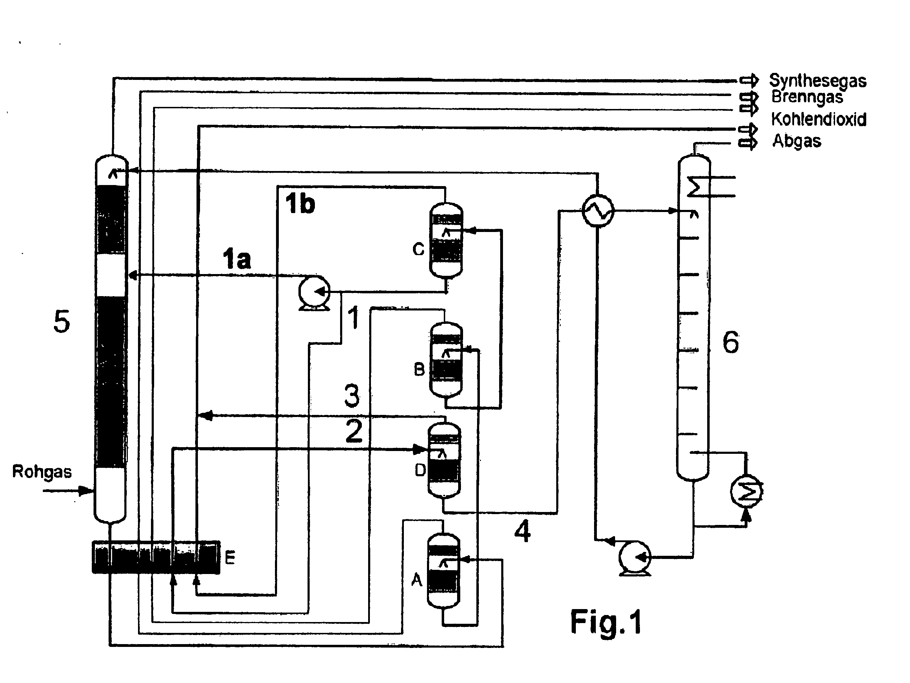

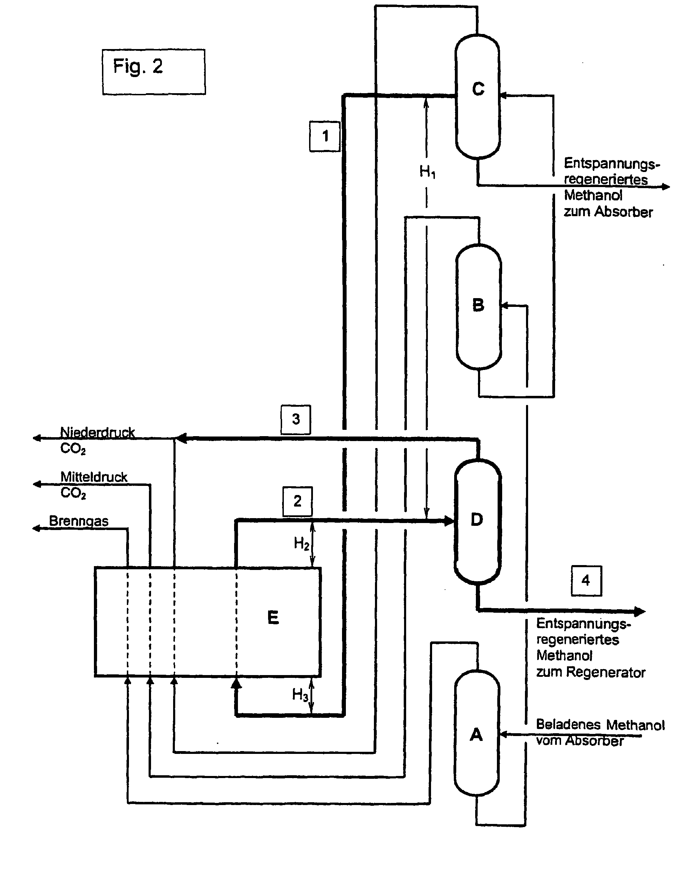

Fig. 1 zeigt die Gesamtanlage zur Desorption von Kohlendioxid und anderen Verunreinigungen aus unter erhöhtem Druck stehendem Methanol, während Fig. 2 die erfindungsgemäße Anlageneinheit darstellt und dabei weitere technische Einzelheiten offenbart.

Für die effektive Durchführung des erfindungsgemäßen Verfahrens ist es von großer Bedeutung, dass die drei Reaktionsgefäße C, D und E in einer ganz bestimmten Höhe zueinander angeordnet sind. Dann lässt sich nämlich erreichen, dass der Flüssigkeitskreislauf in der erwünschten Richtung durch den Wärmeaustauscher E verläuft, ohne dass dafür eine Pumpe erforderlich ist. Allein durch die Schwerkraft und das verdampfende Kohlendioxid entsteht ein Flüssigkeitsfluss, der als Thermosiphoneffekt bekannt ist. Das lässt sich allerdings nur dann erreichen, wenn in der erfindungsgemäßen Anlageneinheit
a) der Flüssigkeitsspiegel im Entspannungsbehälter C etwa 1 bis 20 m über dem Flüssigkeitsspiegel im Flüssig-Gasabscheider D liegt;
b) dieser wiederum etwa 0,5 m über der oben im Wärmeaustauscher E vorgesehenen Austrittsöffnung für das erwärmte Methanol liegt;
c) der Abstand zwischen der von unten in den Wärmeaustauscher E eintretenden Leitung (1) für das aus dem Entspannungsbehälter C zugeleitete Methanol und dem Boden des Wärmeaustauschers E etwa 0,5 m beträgt.

Selbstverständlich lässt sich die erfindungsgemäße Anlageneinheit auch durch den Einsatz von Pumpen betreiben, jedoch ist es besonders vorteilhaft, durch die Anwendung des Thermosiphoneffekts den sich automatisch einstellenden Flüssigkeitsfluss durch die verschiedenen Anlagenteile der erfindungsgemäßen Anlageneinheit auszunutzen.

Die erfindungsgemäße Anlageneinheit ist also einem Absorber (5) nachgeschaltet, der zur Reinigung von Synthesegas mit Methanol vorgesehen ist. Der erfindungsgemäßen Anlageneinheit ist außerdem der erwähnte Regenerator (6) nachgeschaltet, in dem durch weitere Temperaturerhöhung und Einströmen eines erwärmten Inertgases - wie z.B. Methanoldampf - das restliche Kohlendioxid aus dem Methanol desorbiert wird.

Bei der erfindungsgemäßen neuen Anlageneinheit weist der erste Entspannungsbehälter (A) für das durch Desorption erhaltene, aus Wasserstoff und Kohlenmonoxid bestehende Gasgemisch eine zum Wärmeaustauscher (E) führende Leitung und für die Methanol enthaltende Flüssigkeit eine zum Entspannungsbehälter (B) führende Leitung auf.

Bei dieser Anlageneinheit besitzt der zweite Entspannungsbehälter (B) für das durch Desorption erhaltene gasförmige Kohlendioxid eine zum Wärmeaustauscher (E) führende Leitung und für die Methanol enthaltene Flüssigkeit eine zum Entspannungsbehälter (C) führende Leitung.

Dieser Entspannungsbehälter (C) weist für das durch Desorption erhaltene, gasförmige Kohlendioxid eine zum Wärmeaustauscher (E) führende Leitung (1b), eine Leitung (1a) für einen ersten Stoffstrom einer Methanol enthaltenen Flüssigkeit zum vorgeschalteten Absorber (5) und eine zum Wärmeaustaucher (E) führende Leitung (1) für einen zweiten Stoffstrom der Methanol enthaltenden Flüssigkeit auf, wobei der Wärmeaustauscher (E) seinerseits für das dort erwärmte Methanol durch die Leitung (2) mit dem Flüssig/Gas-Abscheider (D) verbunden ist.

Dieser Flüssig/Gas-Abscheider (D) besitzt eine Ableitung (3) für das gasförmige Kohlendioxid und eine weitere, für das abgetrennte Methanol vorgesehene Leitung (4) zum nachgeschalteten Regenerator (6).

Gegenstand der Erfindung ist auch ein Verfahren zur Desorption von Kohlendioxid und anderen gasförmigen Verunreinigungen aus Methanol in der beschriebenen Anlageneinheit, wobei die Desorption stufenweise in mehreren hintereinander geordneten Entspannungsbehältern, mindestens einen Wärmeaustauscher (E) und einem Flüssig/Gas-Abscheider (D) durchgeführt wird das den Entspannungsbehälter (C) verlassende Methanol bei einer Temperatur von -60 +/- 10°C und einen Druck von 1 bis 2 bar in den Wärmeaustauscher (E) eingeleitet, dort auf eine Temperatur von - 10 bis + 5°C Celsius erwärmt und in den Flüssig/Gas-Abscheider (D) eingeleitet, wobei die Weiterleitung der Stoffströme zwischen den Entspannungsbehältern (A, B und C) sowie zum Wärmeaustauscher (E) und zum Flüssig/Gas-Abscheider (D) durch Druckdifferenzen unter Ausnutzung des Thermo-Effektes erfolgt.

In dem Absorber (5) wird das von unten einströmende Rohgas durch das ihm von oben entgegenströmende, kalte Methanol gereinigt. Die den Absorber (5) unten verlassende, alle Verunreinigungen des Rohgases enthaltende Flüssigkeit, wird im Wärmeaustauscher E abgekühlt und in den Entspannungsbehälter A eingeführt. Nach oben hin verlässt den Absorber das gereinigte Synthesegas.

Im Entspannungsbehälter A wird das unter einem Druck von etwa 55 bar stehende Methanol auf etwa 9 bar entspannt und bei einer Temperatur von etwa - 45°C vorwiegend Wasserstoff und Kohlenmonoxid desorbiert, welche als Gasfraktion nach Durchleitung durch den Wärmeaustauscher E dem Verfahren entnommen werden. Die Flüssigkeitsfraktion des Entspannungsbehälters A wird dann über eine Leitung einem zweiten Entspannungsbehälter B zugeleitet.

Im Entspannungsbehälter B wird der Druck des Methanols von etwa 9 bar auf etwa 2,7 bar vermindert und dabei ein Temperaturabfall von etwa - 45°C auf etwa - 52°C beobachtet. Hierbei wird gasförmiges Kohlendioxid aus dem Methanol abgegeben, welches durch den Wärmeaustauscher E geleitet und anschließend dem Verfahren entnommen werden kann, während die erhaltene Flüssigfraktion einem dritten Entspannungsbehälter C zugeleitet wird.

Im Entspannungsbehälter C wird der Druck der Methanollösung von etwa 2,7 bar auf etwa 1,2 bar vermindert und dabei ein weiterer Temperaturabfall von etwa - 52°C auf etwa - 60°C beobachtet. Auch in diesem Entspannungsbehälter wird gasförmiges Kohlendioxid gewonnen, welches ebenfalls dem Wärmeaustauscher E zugeleitet und anschließend dem Verfahren entnommen werden kann.

Die im Entspannungsbehälter C enthaltende Flüssigkeitsfraktion wird dann vorzugsweise in zwei Stoffströme zerlegt, wobei der eine Stoffstrom dem vorgeschalteten Absorber (5) und der zweite Stoffstrom durch die Leitung (1) zum Wärmeaustauscher E geführt wird, der seinerseits für das dort erwärmte Methanol durch die Leitung (2) mit dem Flüssig-Gasabscheider D verbunden ist.

Der Flüssig/Gas-Abscheider D weist eine Ableitung (3) für das gasförmige Kohlendioxid auf, sowie eine weitere Leitung, in der das flüssige Methanol unten aus dem Abscheider entnommen und dem nachgeschalteten Regenerator (6) zugeleitet wird. Die aus dem Flüssig/Gas-Abscheider entnommene Flüssigkeitsfraktion (4) wird dem nachgeschalteten Regenerator (6) zur Entfernung der letzten Spuren von Kohlendioxid zugeleitet, die ihm durch weitere Temperaturerhöhung und Einströmen eines erwärmten Gases, z. B. von Methanoldampf, entzogen werden. Während das Kohlendioxid dem Verfahren entnommen wird, kann das im Regenerator gewonnene hochreine Methanol wieder in den Absorber (5) zurückgeführt werden und steht dort für die Reinigung des neu einströmenden Rohgases wieder zur Verfügung.

Insgesamt ist das erfindungsgemäße Verfahren also dadurch gekennzeichnet, dass stufenweise in mehreren hintereinander angeordneten Entspannungsbehältern, mindestens einem Wärmeaustauscher und mindestens einem Flüssig/Gasabscheider Kohlendioxid aus Methanol desorbiert wird. Dabei hat das den Entspannungsbehälter C verlassende Methanol eine Temperatur von - 60 +/- 10° C und einen Druck von 1 bis 2 bar. Die in einem Wärmeaustauscher E freigesetzte Kälte wird dort als wertvolle Energiequelle für andere Kühlreaktionen zur Verfügung gestellt. Bei diesem Vorgang wird die Temperatur des Methanolstroms im Wärmeaustauscher auf eine Temperatur von - 10 +/- 5 Grad° C erhöht, und der Flüssigkeitsstrom dann bei dieser Temperatur in den Flüssig/Gasabscheider eingeleitet.

Das erfindungsgemäße Verfahren und die dazugehörige Anlageneinheit ermöglichen also in einer äußerst zweckmäßigen Weise die Reinigung des bei der Totalreinigung von Druckgasen eingesetzten und mit Verunreinigungen, insbesondere Kohlendioxid, angereicherten Methanols. Gleichzeitig wird die bei der Desorption von Kohlendioxid entstehende Verdampfungskälte gewonnen, die für Absorptionsprozess von größter Bedeutung ist.

Die in der erfindungsgemäßen Anlageneinheit auftretenden Stoffströme weisen die in der nachfolgenden Tabelle 1 genannten Zusammensetzungen auf.

| Stoffstrom | 1 | 2 | 3 | 4 |
|---|---|---|---|---|
| Stromzusammensetzung | | | | |
| Kohlendioxid | 11.45 | 11.45 | 98.10 | 1.44 |
| Methanol | 88.55 | 88.55 | 1.92 | 98.56 |
| Temperatur | -59.5 | -8.8 | -8.9 | -8.9 |
| Druck (in bar abs) | 1.20 | 1.20 | 1.15 | 1.15 |
| Dampfanteil | 0.00 | 0.10 | 1.00 | 0.00 |
| Fließgeschwindigkeit (t/h) | 585 | 585 | 80 | 505 |

## Patentansprüche

1. Anlageneinheit zur Desorption von Kohlendioxid und anderen Verunreinigungen aus unter erhöhtem Druck stehendem Methanol, die einem zur Reinigung von Synthesegas mit Methanol vorgesehen Absorber (5) nachgeschaltet ist, umfassend einen oder mehrere, hintereinander angeordnete Entspannungsbehälter A, B, C, einen Wärmeaustauscher E und mindestens einen Flüssig/Gas-Abscheider D, **dadurch gekennzeichnet, dass**
a) eine Leitung (1) vorgesehen ist, durch die das den Entspannungsbehälter C verlassende, stark abgekühlte Methanol von unten in einen Wärmetaustauscher E eingeleitet wird; und
b) eine Leitung (2) vorgesehen ist, durch die das erwärmte Methanol oben aus dem Wärmeaustauscher E herausgeführt wird und ihn mit einem Flüssig/Gas-Abscheider verbindet, in dem das restliche, noch im Methanol enthaltene Kohlendioxid weitestgehend desorbiert wird;
c) wobei der Flüssigkeitsspiegel im Entspannungsbehälter C 1 bis 20 m über dem Flüssigkeitsspiegel im Flüssig/Gas-Abscheider D liegt;
d) dieser wiederum etwa 0,5 m über der oben im Wärmeaustauscher E vorgesehenen Austrittsöffnung für das erwärmte Methanol liegt; und
e) der Abstand zwischen der von unten in den Wärmeaustauscher E eintretenden Leitung (1) für das aus dem Entspannungsbehälter C zugeleitete Methanol und dem Boden des Wärmeaustauschers E etwa 0,5 m beträgt und
f) der Anlageneinheit ein Regenerator (6) nachgeschaltet ist, in dem durch weitere Temperaturerhöhung und Einströmen eines erwärmten inerten Gases das restliche Kohlendioxid aus dem Methanol desorbiert wird.

2. Anlageneinheit nach Anspruch 1, **dadurch gekennzeichnet, dass** der erste Entspannungsbehälter A für das durch Desorption erhaltene, aus Wasserstoff und Kohlenmonoxid bestehende Gasgemisch eine zum Wärmeaustauscher E führende Leitung und für die Methanol enthaltende Flüssigkeit eine zum Entspannungsbehälter B führende Leitung aufweist.

3. Anlageneinheit nach den Ansprüchen 1 und 2, **dadurch gekennzeichnet, dass** der zweite Entspannungsbehälter B für das durch Desorption erhaltene, gasförmige Kohlendioxid eine zum Wärmeaustauscher E führende Leitung und für die Methanol enthaltende Flüssigkeit eine zum Entspannungsbehälter C führende Leitung aufweist.

4. Anlageneinheit nach den Ansprüchen 1 bis 3, **dadurch gekennzeichnet, dass** der Entspannungsbehälter C für das durch Desorption erhaltene, gasförmige Kohlendioxid eine zum Wärmeaustauscher E führende Leitung (1 b), eine Leitung (1a) für einen ersten Stoffstrom einer Methanol enthaltenden Flüssigkeit zum vorgeschalteten Absorber (5) und eine zum Wärmeaustauscher E führende Leitung (1) für einen zweiten Stoffstrom der Methanol enthaltenden Flüssigkeit aufweist, wobei dem Wärmeaustauscher E seinerseits für das dort erwärmte Methanol durch die Leitung (2) mit dem Flüssig/Gas-Abscheider D verbunden ist.

5. Anlageneinheit nach den Ansprüchen 1 bis 4, **dadurch gekennzeichnet, dass** der Flüssig/Gas-Abscheider D eine Ableitung (3) für das gasförmige Kohlendioxid und eine weitere, für das abgetrennte Methanol vorgesehene Leitung (4) zum nachgeschalteten Regenerator (6) aufweist.

6. Verfahren zur Desorption von Kohlendioxid und anderen gasförmigen Verunreinigungen aus Methanol in der Anlageneinheit gemäß den Ansprüchen 1 bis 5, wobei die Desorption stufenweise in mehreren hintereinander angeordneten Entspannungsbehältern, mindestens einem Wärmeaustauscher E und mindestens ein Flüssig/Gas-Abscheider D durchgeführt wird, **dadurch gekennzeichnet, dass** das den Entspannungsbehälter C verlassende Methanol bei einer Temperatur von -60 ± 10°C und einem Druck von 1 bis 2 bar in den Wärmeaustauscher E eingeleitet, dort auf eine Temperatur von -10 ± 5°C erwärmt und in den Flüssig/Gas-Abscheider D eingeleitet wird, wobei die Weiterleitung der Stoffströme zwischen den Entspannungsbehältern A, B und C sowie zum Wärmeaustauscher E und zum Flüssig/Gas-Abscheider D durch Druckdifferenzen unter Ausnutzung des Thermosiphon-Effekts erfolgt.

7. Verfahren nach Anspruch 6, **dadurch gekennzeichnet, dass** im Entspannungsbehälter A der Druck von etwa 55 bar auf etwa 9 bar vermindert und bei einer Temperatur von etwa -45°C vorwiegend Wasserstoff und Kohlenmonoxid desorbiert werden, wobei die erhaltene Gasfraktion nach Durchleitung durch den Wärmeaustauscher E dem Verfahren entnommen wird, während die Flüssigfraktion einem zweiten Entspannungsbehälter B zugeleitet wird.

8. Verfahren nach den Ansprüchen 6 und 7, **dadurch gekennzeichnet, dass** in dem zweiten Entspannungsbehälter B der Druck von etwa 9 bar auf etwa 2,7 bar vermindert und bei einem Temperaturabfall von etwa -45°C auf etwa -52°C gasförmiges Kohlendioxid erhalten wird, welches durch den Wärmeaustauscher E geleitet und anschließend dem Verfahren entnommen wird, während die erhaltene Flüssigfraktion dem dritten Entspannungsbehälter C zugeführt wird.

9. Verfahren nach den Ansprüchen 6 bis 8, **dadurch gekennzeichnet, dass** in dem dritten Entspannungsbehälter C der Druck von etwa 2,7 bar auf etwa 1,2 bar vermindert und bei einem Temperaturabfall von etwa -52°C auf etwa -60°C gasförmiges Kohlendioxid erhalten wird, welches durch den Wärmeaustauscher E geleitet und anschließend dem Verfahren entnommen werden kann.

10. Verfahren nach den Ansprüchen 6 bis 9, **dadurch gekennzeichnet, dass** die in dem dritten Entspannungsbehälter C enthaltene Flüssigfraktion in zwei Stoffströme zerlegt wird, wobei der eine Stoffstrom dem vorgeschalteten Absorber (5) und der zweite Stoffstrom nach Durchleitung durch den Wärmeaustauscher E über die Leitung (2) dem Flüssig/Gas-Abscheider D zugeleitet wird.

11. Verfahren nach den Ansprüchen 6 bis 10, **dadurch gekennzeichnet, dass** die im Flüssig/Gas-Abscheider D gewonnene Flüssigfraktion (4) einem nachgeschalteten Regenerator (6) zur Entfernung der letzten Spuren von Kohlendioxid zugeleitet und die Gasfraktion (3) vorzugsweise vereint mit weiteren, kohlendioxidreichen Gasfraktionen dem Verfahren entnommen wird.

## Claims

1. An installation unit for desorption of carbon dioxide and other impurities from methanol under an elevated pressure, connected downstream from an absorber (5) provided for purification of synthesis gas with methanol, comprising one or more series-connected depressurization containers A, B, C, a heat exchanger E and at least one liquid gas separator D, **characterized in that**
a) a line (1) through which the greatly cooled methanol leaving the flash depressurization container C is introduced from beneath into a heat exchanger E; and
b) a line (2) is provided through which the heated methanol is carried out of the heat exchanger E at the top and connects it to a liquid gas separator in which the remaining carbon dioxide which is still present in the methanol is largely desorbed;
c) wherein the liquid level in the depressurization container C is 1 to 20 m above the liquid level in the liquid gas separator D;
d) this separator is in turn approximately 0.5 m above the outlet opening for the heated methanol which is provided at the top of the heat exchanger E; and
e) the distance between the line (1) for the methanol supplied out of the depressurization container C and entering the heat exchanger E and the bottom of the heat exchanger E is approximately 0.5 m and
f) a regenerator (6) in which the remaining carbon dioxide is desorbed from the methanol by a further increase in temperature and influx of a heated inert gas is connected downstream from the installation unit.

2. The installation unit according to Claim 1, **characterized in that** the first depressurization container A for the gas mixture, which is obtained by desorption and consists of hydrogen and carbon monoxide, has a line leading to the heat exchanger E and has a line for the liquid that contains methanol leading to the depressurization container B.

3. The installation unit according to Claims 1 and 2, **characterized in that** the second depressurization container B for the gaseous carbon dioxide obtained by desorption has a line leading to the heat exchanger E and a line for the liquid that contains methanol leading to the depressurization container C.

4. The installation unit according to Claims 1 to 3, **characterized in that** the depressurization container C for the gaseous carbon dioxide obtained by desorption has a line (1b) leading to the heat exchanger, a line (1a) for a first substance stream of a liquid that contains methanol to the upstream absorber (5) and a line (1) for a second substance stream of the liquid that contains methanol leading to the heat exchanger E such that the heat exchanger E for the methanol thereby heated is connected by the line (2) to the liquid gas separator D.

5. The installation part according to Claims 1 to 4, **characterized in that** the liquid gas separator D has an outlet line (3) for the gaseous carbon dioxide and another line (4) which is provided for the separated methanol to the downstream regenerator (6).

6. A method for desorption of carbon dioxide and other gaseous impurities for methanol in the installation unit according to Claims 1 to 5, wherein the desorption is performed in stages in a series of several depressurization containers connected in series, at least one heat exchanger E and at least one liquid gas separator D, **characterized in that** the methanol leaving the depressurization container C is introduced at a temperature of -60° ± 10°C and a pressure of 1 to 2 bar into the heat exchanger E, where it is heated to a temperature of -10 ± 5°C and is introduced into the liquid gas separator, where the substance streams are conveyed further between the depressurization containers A, B and C and to the heat exchanger E and to the liquid gas separator D through pressure differences, utilizing the thermosiphon effect.

7. The method according to Claim 6, **characterized in that** the pressure in the depressurization container A is reduced from approximately 55 bar to approximately 9 bar and at a temperature of -45°C, mainly hydrogen and carbon monoxide are desorbed, wherein the resulting gas fraction is removed from the process after passing it through the heat exchanger E, while the liquid fraction is sent to a second depressurization container B.

8. The method according to Claims 6 and 7, **characterized in that** the pressure in the second depressurization container B is reduced from approximately 9 bar to approximately 2.7 bar and gaseous carbon dioxide is obtained at a pressure drop from approximately -45°C to approximately -52°C, this carbon dioxide then being conveyed through the heat exchanger E and then withdrawn from the process while the liquid fraction thus obtained is supplied to the third depressurization container C.

9. The method according to Claims 6 to 8, **characterized in that** the pressure in the third depressurization container C is reduced from approximately 2.7 bar to approximately 1.2 bar and gaseous carbon dioxide is obtained at a temperature drop from approximately - 52°C to approximately -60°C, this gaseous carbon dioxide then being passed through the heat exchanger E and next optionally being withdrawn from the process.

10. The method according to Claims 6 through 9, **characterized in that** the liquid fraction contained in the third depressurization container C is broken down into two substance streams, the one substance stream being sent to the upstream absorber (5) and the second substance stream being sent to the liquid gas separator D after being passed through the heat exchanger E via the line (2).

11. The method according to Claims 6 through 10, **characterized in that** the liquid fraction (4) obtained in the liquid gas separator D is sent to a downstream regenerator (6) for removing the last traces of carbon dioxide, and the gas fraction (3) is withdrawn from the process, preferably combined with additional carbon dioxide-rich gas fractions.

## Revendications

1. Unité d'équipement pour la désorption de dioxyde de carbone et d'autres impuretés hors de méthanol placé sous pression élevée, qui est montée en aval d'un absorbeur (5) prévu pour purifier du gaz de synthèse à l'aide de méthanol, comprenant un ou plusieurs vases de compensation A, B, C, disposés les uns derrière les autres, un échangeur thermique E et au moins un séparateur de liquide/de gaz D, **caractérisée**
a) **en ce qu'**il est prévu un conduit (1) à travers lequel le méthanol fortement refroidi quittant le vase de compensation C est introduit par le bas dans un échangeur thermique E ; et
b) **en ce qu'**il est prévu un conduit (2) à travers lequel le méthanol échauffé est conduit par le haut hors de l'échangeur thermique E et le reliant avec un séparateur de liquide/de gaz, dans lequel le dioxyde de carbone résiduel encore contenu dans le méthanol est amplement désorbé ;
c) le niveau du liquide dans le vase de compensation C se situe à de 1 à 20 m au-dessus du niveau de liquide dans le séparateur de liquide/de gaz D ;
d) ce dernier se situe quant à lui environ 0,5 m au-dessus de l'orifice de sortie prévu en haut dans l'échangeur thermique E pour le méthanol échauffé ; et
e) l'écart entre le conduit (1) s'introduisant par le bas dans l'échangeur thermique E pour le méthanol amené à partir du vase de compensation C et le fond inférieur de l'échangeur thermique E est d'environ 0,5 m et
f) un régénérateur (6) dans lequel par une élévation supplémentaire de la température et affluence d'un gaz inerte échauffé, le dioxyde de carbone résiduel est désorbé hors du méthanol est monté en aval de l'unité d'équipement.

2. Unité d'équipement selon la revendication 1, **caractérisée en ce que** le premier vase de compensation A pour le mélange gazeux obtenu par désorption, constitué d'hydrogène et de monoxyde de carbone comporte un conduit menant à l'échangeur thermique E et pour le liquide contenant du méthanol, un conduit menant au vase de compensation B.

3. Unité d'équipement selon les revendications 1 et 2, **caractérisée en ce que** le deuxième vase de compensation B comporte un conduit menant à l'échangeur thermique E pour le dioxyde de carbone gazeux obtenu par désorption et un conduit menant au vase de compensation C pour le liquide contenant du méthanol.

4. Unité d'équipement selon les revendications 1 à 3, **caractérisée en ce que** le vase de compensation C pour le dioxyde de carbone gazeux obtenu par désorption comporte un conduit (1b) menant vers l'échangeur thermique E, un conduit (1a) pour un premier flux de matière d'un liquide contenant du méthanol vers l'absorbeur (5) monté en amont et un conduit (1) menant vers l'échangeur thermique E pour un deuxième flux de matière du liquide contenant du méthanol, l'échangeur thermique E étant quant à lui relié avec le séparateur de liquide/de gaz D par le conduit (2) pour le méthanol qui y est échauffé.

5. Unité d'équipement selon les revendications. 1 à 4, **caractérisé en ce que** le séparateur de liquide/de gaz D comporte un conduit d'évacuation (3) pour le dioxyde de carbone gazeux et un conduit supplémentaire (4) vers le régénérateur (6) monté en aval, prévu pour le méthanol séparé.

6. Procédé de désorption de dioxyde de carbone et d'autres impuretés gazeuses hors de méthanol dans l'unité d'équipement selon les revendications 1 à 5, la désorption étant réalisée par étapes dans plusieurs vases de compensation disposés les uns derrière les autres, dans au moins un échangeur thermique E et dans au moins un séparateur de liquide/de gaz D, **caractérisé en ce que** le méthanol quittant le vase de compensation C est introduit à une température de -60 à ±10°C et sous une pression de 1 à 2 bar dans l'échangeur thermique E, y est échauffé à une température de -10 à ±5°C et introduit dans le séparateur de liquide/de gaz D, le transfert ultérieur des flux de matières entre les vases de compensation A, B et C ainsi que vers l'échangeur thermique E et vers le séparateur de liquide/de gaz D s'effectuant par pressions différentielles, sous exploitation de l'effet thermosiphon.

7. Procédé selon la revendication 6, **caractérisé en ce que** dans le vase de compensation A, on réduit la pression d'environ 55 bar à environ 9 bar et à une température de -45°C, prioritairement de l'hydrogène et du monoxyde de carbone sont désorbés, la fraction gazeuse obtenue étant prélevée du procédé après passage à travers l'échangeur thermique E alors que la fraction liquide est amenée vers un deuxième vase de compensation B.

8. Procédé selon les revendications 6 et 7, **caractérisé en ce que** dans le deuxième vase de compensation B, on réduit la pression d'environ 9 bar à environ 2,7 bar et à une chute de température d'environ -45°C à environ -52°C du dioxyde de carbone gazeux est obtenu, lequel est dirigé à travers l'échangeur thermique E et ensuite prélevé du procédé, alors que la fraction liquide obtenue est amenée vers le troisième vase de compensation C.

9. Procédé selon les revendications 6 à 8, **caractérisé en ce que** dans le troisième vase de compensation C, on réduit la pression de 2,7 bar à environ 1,2 bar et à une chute de température d'environ -52°C à environ - 60°C, on obtient du dioxyde de carbone gazeux, lequel est dirigé à travers l'échangeur thermique E et peut ensuite être prélevé du procédé.

10. Procédé selon les revendications 6 à 9, **caractérisé en ce qu'**on décompose la fraction liquide obtenue dans le troisième vase de compensation C en deux flux de matières, le premier flux de matière étant amené à l'absorbeur (5) monté en amont, et après avoir traversé l'échangeur thermique E, le deuxième flux de matière étant amené via le conduit (2) vers le séparateur de liquide/de gaz D.

11. Procédé selon les revendications 6 à 10, **caractérisé en ce que** la fraction liquide (4) obtenue dans le séparateur de liquide/de gaz D est amenée vers un régénérateur (6) monté en aval, pour l'élimination des dernières traces de dioxyde de carbone et **en ce que** la fraction gazeuse (3) est prélevée du procédé, de préférence en association avec d'autres fractions gazeuses, riches en dioxyde de carbone.
